(19) Europäisches Patentamt / European Patent Office / Office européen des brevets

(11) **EP 2 141 040 B1**

(12) **EUROPEAN PATENT SPECIFICATION**

(45) Date of publication and mention of the grant of the patent:
**06.12.2017 Bulletin 2017/49**

(21) Application number: **08740795.3**

(22) Date of filing: **23.04.2008**

(51) Int Cl.:
**B60K 5/12** *(2006.01)*     **F16F 15/02** *(2006.01)*

(86) International application number:
**PCT/JP2008/057856**

(87) International publication number:
**WO 2008/136325 (13.11.2008 Gazette 2008/46)**

(54) **VIBRATION-PROOF DEVICE**

VIBRATIONSBESTÄNDIGE VORRICHTUNG

DISPOSITIF ANTI-VIBRATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.04.2007 JP 2007117150**
**20.11.2007 JP 2007300666**

(43) Date of publication of application:
**06.01.2010 Bulletin 2010/01**

(73) Proprietor: **Bridgestone Corporation**
**Tokyo 104-8340 (JP)**

(72) Inventors:
 • **SUZUKI, Yasuhiro**
  **Yokohama-shi**
  **Kanagawa 244-8510 (JP)**
 • **ADACHI, Hironori**
  **Yokohama-shi**
  **Kanagawa 244-8510 (JP)**
 • **OOISHI, Masanori**
  **Yokohama-shi**
  **Kanagawa 244-8510 (JP)**
 • **MURAKAMI, Kazutomo**
  **Kodaira-shi**
  **Tokyo 187-8531 (JP)**
 • **KOBAYASHI, Katsuhiro**
  **Kodaira-shi**
  **Tokyo 187-8531 (JP)**
 • **WATAI, Hirokazu**
  **Kodaira-shi**
  **Tokyo 187-8531 (JP)**

(74) Representative: **Oxley, Robin John George et al**
**Marks & Clerk LLP**
**90 Long Acre**
**London WC2E 9RA (GB)**

(56) References cited:
| | |
|---|---|
| JP-A- 07 300 021 | JP-A- 07 300 021 |
| JP-A- 11 325 165 | JP-A- 11 325 165 |
| JP-A- 2000 211 337 | JP-A- 2000 211 337 |
| JP-A- 2001 003 980 | JP-A- 2003 312 273 |
| JP-A- 2003 312 273 | JP-A- 2005 083 529 |

# EP 2 141 040 B1

**Description**

Technical Field

The present invention relates to a damper mounted in a vehicle for an automobile, an industrial machine and the like.

Prior Art

A damper of this type is mounted for use in a vehicle in which a drive unit having an engine is provided in a vehicle body frame. There have conventionally been made various proposals to suppress transfer of vibrations generated in the driving unit to the vehicle body frame so that good ride comfort and driving stability are achieved (see, for example, JP-A 11-325165).

Disclosure of the Invention

Problems to be solved by the Invention

In recent years, there has been an increasing demand for further improvement of driving stability. The inventors of the present invention have keenly studied how to address such a demand. As a result, it has been revealed that torque transferred to a tire by way of a drive shaft varies due to vibration of the drive unit or more specifically due to vibration behaviors of the drive unit itself, regardless of during running straight or cornering, whereby, for example, thrust force and the like generated between a ground contact surface of the tire and the ground varies, becoming a factor of deteriorating driving stability.

The present invention has been made in consideration of such facts as described above and an object thereof is to provide a damper capable of further improving driving stability.

Means for solving the Problems

In order to solve the aforementioned problems and achieve the object as described above, a vehicle having a damper is provided according to claim 1.

According to the present invention, there is provided a controller for controlling at least roll vibration of vibration behaviors of the drive unit by operating the connection part on the basis of a detection signal from the detection means. Therefore, it is possible to suppress variation of torque transferred from the drive unit to a drive shaft, which variation is caused by vibration behaviors of the drive unit itself, whereby torque transferred to the tire can be made stable. As a result, for example, variation of thrust force and the like generated between a ground contact surface of the tire and the ground can be suppressed and driving stability can be improved.

In the present invention, the detection means may be adapted to detect variation in torque transferred to the drive shaft in a structure in which tires are connected to respective end portions, in the axial direction, of the drive unit. According to this structure, variation of torque transferred to a tire can be detected further accurately.

Further, the connection part is preferably a mount part or a torque rod for elastically connecting the drive unit with the vehicle body frame. In such a structure as this, transfer of vibrations of the drive unit to the vehicle body frame can be suppressed, whereby good ride comfort is provided and controlling vibration behaviors of the drive unit by operating the connection part can be easily realized.

Yet further, the connection part may be provided on each of respective side portions interposing a crank shaft therebetween in the horizontal direction, of the drive unit. In this case, since the connection part is provided on each of respective side portions interposing a crank shaft therebetween in the horizontal direction, of the drive unit, the aforementioned roll vibration can be easily and reliably suppressed by operating the connection part as described above.

Yet further, the detection means may be provided, in the drive unit, in at least one of a crank shaft and the outer surface of a case constituting the external contour of the drive unit. In a case where the detection means is provided at the outer surface of a case constituting the external contour of the drive unit, it is possible to prevent the detection means from, for example, being hit by pebbles on the ground and exposed to harsh weather.

In a case where the detection means is provided on the crank shaft, it is possible to detect variation of torque transferred from the drive unit to the drive shaft in a highly precise manner.

Yet further, the controller may be adapted to control at least a frequency component in the range of 5 to 50 Hz (5 and 50 are inclusive), of roll vibration of the drive unit. In this case, the aforementioned effect in operation can be reliably demonstrated.

Brief Description of the Drawings

FIG. 1 is a schematic structural view showing a state in which a damper according to an embodiment of the present invention is mounted in a vehicle.

FIG. 2 is a schematic view showing a plan-view arrangement of an engine according to the embodiment of the present invention.

FIG. 3 is a schematic view showing a side face of the engine viewed in the arrow direction of A-A in FIG. 1.

FIG. 4 is a block diagram showing a control system of the damper according to the embodiment of the present invention.

FIG. 5 is a block diagram showing a system used when feedback matrix is designed.

FIG. 6 is a graph showing dependency, on frequency, of amplitude of displacement of a position at which an acceleration sensor is fixed.

Explanation of Reference Numerals

| 2 | Vehicle body frame |
| 3a, 3b | ACM |
| 4a, 4b | Acceleration sensor |
| 10 | Damper |
| 11 | Drive unit |
| 11a | Engine |
| 11b | Transmission |
| 11c | Crank shaft |
| 12 | Drive shaft |
| 13 | Tire |
| 14 | Vehicle |
| 16 | Connection part |
| 17 | Detection means |
| 18 | Controller |
| 18a | First amplifier |
| 18b | Filter |
| 18c | High-speed arithmetic processing unit |
| 18e | Second amplifier |
| O | Roll axis |

Best Mode for implementing the Invention

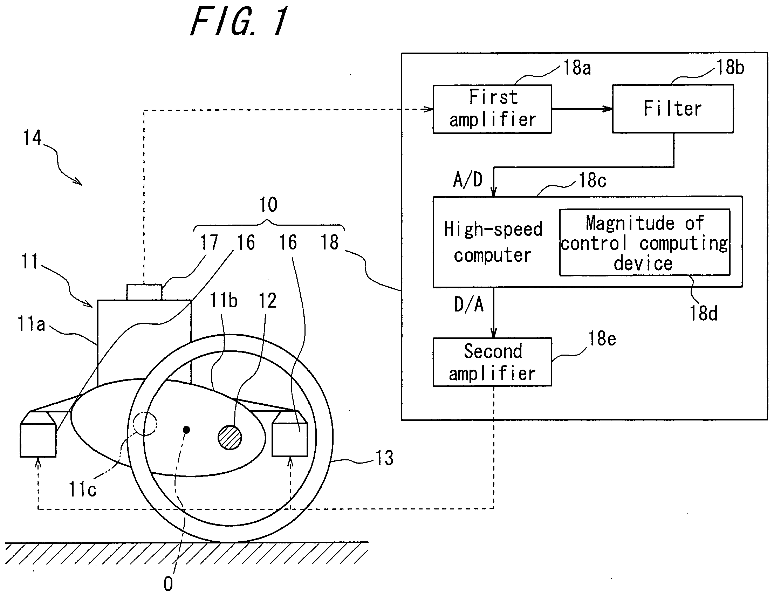

An embodiment of a damper according to the present invention will be described hereinbelow with reference to FIG. 1. The damper 10 is mounted for use in a vehicle 14 in which a drive unit 11 having an engine 11a and a drive shaft 12 having tires 13 connected to respective end portions in the axial direction thereof, to which drive shaft torque is transferred from the engine 11a, are provided in a vehicle body frame 2 . The damper 10 includes a connection part 16 for connecting the drive unit 11 with the vehicle body frame 2.

The drive unit 11 is provided inside the vehicle body frame 2 on the vehicle 14 front side therein and includes the engine 11a, a transmission 11b, a crank shaft 11c and the like. The crank shaft 11c is provided to extend along the lateral direction of the vehicle 14.

The drive shaft 12 is provided to extend along the lateral direction of the vehicle 14 at a position distanced, in the front-rear direction of the vehicle 14, from the crank shaft 11c. In the example shown in FIG. 1, the drive shaft 12 is provided on the vehicle 14 rear side of the crank shaft 11c. The drive shaft 12 is structured such that torque of the crank shaft 11c is transferred thereto via the transmission 11b.

The pair of left and right hand side tires 13 provided on the front side of the vehicle 14 are independently connected to respective end portions of the drive shaft 12 such that the tires 13 are rotated as the drive shaft 12 is rotated around the axis thereof.

Vibration behaviors of the drive unit 11 itself mainly include vibrations of the drive unit in the vehicle 14 vertical direction, the vehicle lateral direction and the vehicle front-rear direction, as well as roll vibration around the roll axis O of the drive unit 11. Among these vibrations of the drive unit in the vehicle 14 of the present embodiment, the roll vibration most significantly varies torque transferred from the drive unit 11 to the drive shaft 12.

The roll axis O is a virtual axis determined by moment of inertia of the drive unit 11, which moment of inertia is derived from the performance, disposure position and the like of the connection part 16, and exists between the crank shaft 11c and the drive shaft 12.

Further, in the present embodiment, the damper 10 is provided with: detection means 17 for detecting vibration of the driving unit 11 with respect to a ground contact surface of the tire; and a controller 18 for controlling the aforementioned roll vibration (e.g. 5 to 50 Hz) of the drive unit 11 by operating the connection part 16 on the basis of a detection signal from the detection means 17.

The detection means 17 is an acceleration sensor in the shown example, which is mounted on the outer surface of a case of the engine 11a, of the cases constituting the external contour of the drive unit 11, and is adapted to be capable of detecting variation of torque transferred from the drive unit 11 to the drive shaft 12 by measuring acceleration in the vehicle front-rear direction of the drive unit 11. The detection means 17 is mounted at the upper end portion in the outer surface of a case of the engine 11a.

The connection part 16 is a mount part for elastically supporting the drive unit 11 from the under side thereof. In the present embodiment, the connection part 16 is provided at respective side portions of the drive unit 11 interposing the crank shaft 11c therebetween in a direction orthogonal to the extending direction of the crank shaft. In the shown example, the connection part 16 is provided at each of respective side portions, in the vehicle 14 front-rear direction, of the drive unit 11 such that the respective connection parts form a pair of connection parts. One connection part 16 is disposed further on the vehicle 14 front side than the crank shaft 11c and the other connection part 16 is disposed further on the vehicle 14 rear side than the roll axis O.

Further, each connection part 16 is provided such that the connection part is connected with, for example, a fluid pressure cylinder or the like and capable of being raised/lowered in the vehicle 14 vertical direction.

The controller 18 includes: a first amplifier 18a for amplifying a detection signal from the detection means 17; a filter 18b for selectively retaining a specific frequency band related to roll vibration of the drive unit 11 and removing other frequency components (e.g. acceleration components in acceleration/ deceleration of the vehicle itself) from the detection signal processed by the first amplifier 18a; a high-speed arithmetic processing unit 18c for specifying the connection part 16 to be controlled, of the two connection parts 16 described above, and determining a magnitude of control of the connection part 16 on the basis of the detection signal processed by the filter 18b; and a second amplifier 18e for amplifying data of the magnitude of control of the connection part.

The aforementioned roll vibration of the drive unit 11 is suppressed by independently operating each of the pair of connection parts 16 on the basis of the calculation results in the controller 18.

Specifically, in FIG. 1, when the drive unit 11 is rotated clockwise around the roll axis O, for example, a driving force to push the side portion on the vehicle 14 rear side of the drive unit 11 up is exerted on the connection part 16 disposed on the vehicle 14 rear side, of the pair of the connection parts 16, while a driving force to pull the side portion on the vehicle 14 front side of the drive unit 11 down is exerted on the connection part 16 disposed on the vehicle 14 front side. In contrast, when the drive unit 11 is rotated anticlockwise around the roll axis O, a driving force to push the side portion on the vehicle 14 front side of the drive unit 11 up is exerted on the connection part 16 disposed on the vehicle 14 front side, of the pair of the connection parts 16, while a driving force to pull the side portion on the vehicle 14 rear side of the drive unit 11 down is exerted on the connection part 16 disposed on the vehicle 14 rear side.

As described above, according to the damper 10 of the present embodiment, there is provided a controller 18 for controlling the aforementioned roll vibration of the drive unit 11 by operating the connection part 16 on the basis of a detection signal from the detection means 17, whereby it is possible to suppress variation of torque transferred from the drive unit 11 to the drive shaft 12, which variation is caused by vibration behaviors of the drive unit itself, and thus torque transferred to the tire 13 can be made stable. As a result, for example, variation of thrust force and the like generated between a ground contact surface of the tire 13 and the ground can be suppressed and driving stability can be improved.

Further, in the present embodiment, the connection part 16 is a mount part for elastically connecting the drive unit 11 with the vehicle body frame 2. Accordingly, transfer of vibrations of the drive unit 11 to the vehicle body frame 2 can be suppressed, whereby good ride comfort is provided and controlling vibration behavior of the drive unit 11 by operating the connection part 16 can be easily realized.

Yet further, in the present embodiment, the connection parts 16 are provided on respective side portions interposing the crank shaft 11c therebetween in the horizontal direction, of the drive unit 11. Accordingly, the aforementioned roll vibration can be easily and reliably suppressed by operating the connection part as described above.

Yet further, the detection means 17 is provided, in the drive unit 11, at the outer surface of a case constituting the external contour of the drive unit. Accordingly, it is possible to prevent the detection means 17 from, for example, being hit by pebbles on the ground and exposed to harsh weather.

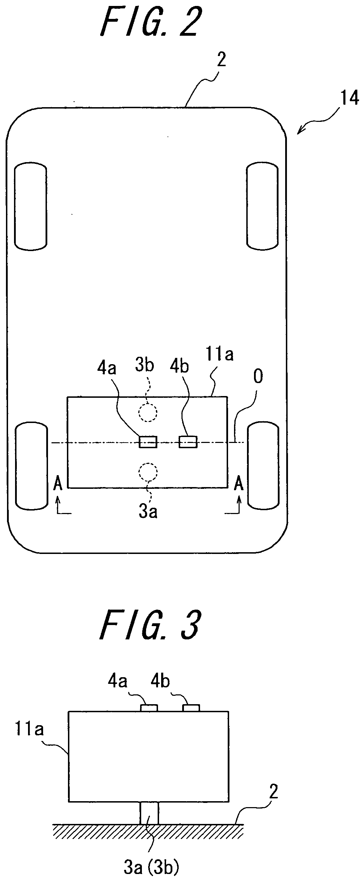

Regarding the present embodiment, hereinbelow there will be exemplarily described a control method which can more effectively control roll vibration and improve driving stability. FIG. 2 is a schematic view showing a plan-view arrangement of the engine 11a realizing this control method. FIG. 3 is a schematic view showing a side face of the engine viewed in the arrow direction of A-A in FIG. 1, in which the engine 11a is supported on the vehicle body frame 2 by plural (two in the shown example) ACMs or active control mounts 3a, 3b constituting the connection part 16. These ACMs 3a, 3b support the engine and actively applies vibration suppressing force to the engine 11a, thereby functioning to suppress transfer of vibrations to the vehicle body.

Further, acceleration sensors 4a, 4b constituting the detection means 17 are fixed at plural positions (two positions in the example shown in the drawings) at a surface (the upper surface of the engine in the example shown in the drawings) of the engine 11a such that the acceleration sensors function to detect, in real time, accelerations at the respective positions on the engine 11a. The acceleration sensors 4a, 4b are set such that these sensors each detect the rotational component around the roll axis O, i.e. acceleration in the roll rotation direction (the front-rear direction of the vehicle) of the engine 11a.

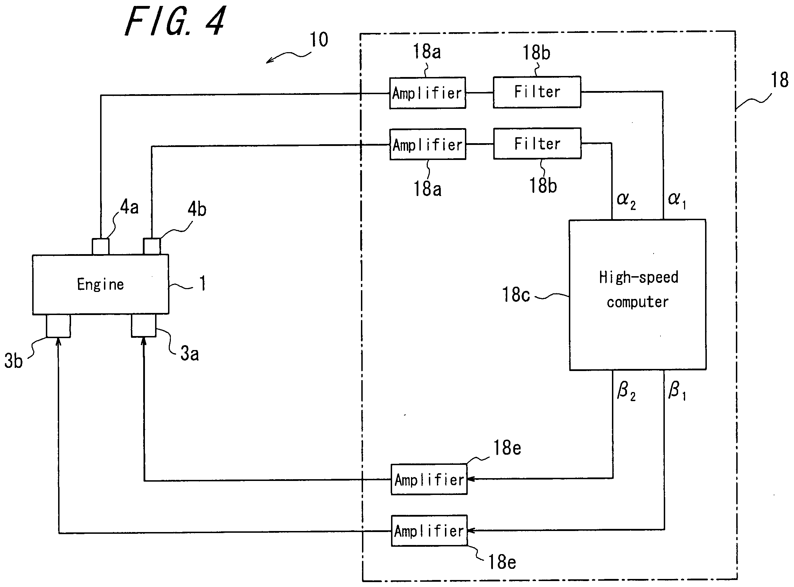

FIG. 4 is a block diagram showing a control structure of the damper 10 of the present embodiment. The damper 10 supports the engine 11a on the vehicle body frame 2 and includes: plural ACMs 3a, 3b for suppressing vibration; plural acceleration sensors 4a, 4b fixed at positions different from each other on a surface of the engine 11a; and a controller 18 for controlling vibration suppressing force of the ACMs 3a, 3b on the basis of acceleration signals from the acceleration sensors 4a, 4b.

The controller 18 includes the high-speed arithmetic processing unit 11c (18c) for conducting real-time calculation of signals $\beta_1$ and $\beta_2$ for controlling respective vibration suppressing forces of plural ACMs 3a, 3b, which calculation is based on a preset fixed feedback filter matrix and acceleration signals $\alpha_1$ and $\alpha_2$ from the plural acceleration sensors 4a, 4b, which acceleration signals vary as the vehicle is driven. The controller 18 is further provided with the first amplifier 18a for amplifying signals from the acceleration sensors 4a, 4b to obtain the acceleration signals $\alpha_1$ and $\alpha_2$ and the first amplifier 18a (the second amplifier 18e) for amplifying the output signals $\beta_1$ and $\beta_2$ from the high-speed arithmetic processing unit 11c (18c) to input the amplified signals to the ACMs 3a, 3b.

The main object of the present invention is to suppress vibration in the roll resonant vibration mode of the engine. In this case, the filter 18b is preferably a filter which allows only a frequency in the range of 10 to 20 Hz including resonant frequencies of an engine in general to pass therethrough.

The output signals $\beta_1$ and $\beta_2$ can be obtained on the basis of the acceleration signals $\alpha_1$ and $\alpha_2$ by using the feedback filter matrix according to the formula (1) below.

$$\begin{bmatrix} B_1(s) \\ B_2(s) \end{bmatrix} = \begin{bmatrix} K_{11}(s) & K_{12}(s) \\ K_{21}(s) & K_{22}(s) \end{bmatrix} \cdot \begin{bmatrix} A_1(s) \\ A_2(s) \end{bmatrix} \qquad (1)$$

In the formula (1), $A_1(s)$, $A_2(s)$, $B_1(s)$ and $B_2(s)$ are obtained by subjecting $\alpha_1$, $\alpha_2$, $\beta_1$ and $\beta_2$ to the Laplace transform.

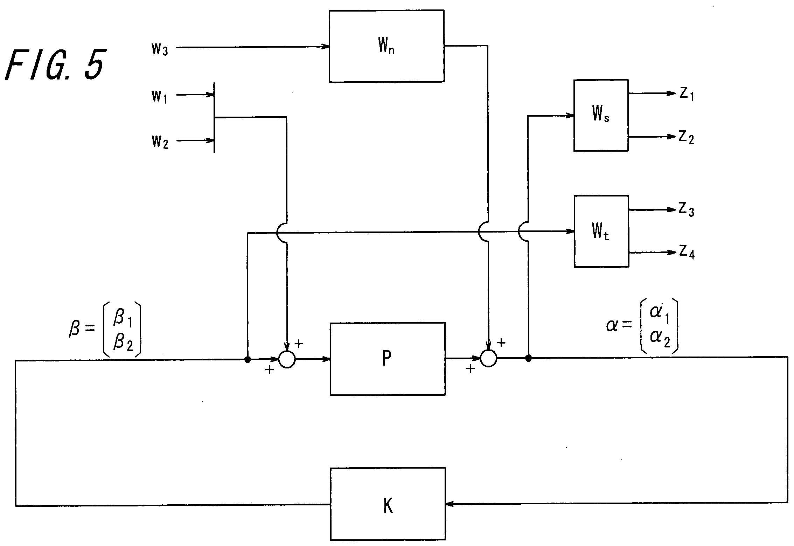

Further, $K_{11}$, $K_{12}$, $K_{21}$ and $K_{22}$ constituting the feedback filter matrix can be designed, for example, as follows. First, the designing of $K_{11}$, $K_{12}$, $K_{21}$ and $K_{22}$ is grasped as a mixed sensitivity problem in H∞ control using input terminal disturbance. Then, in a system as shown in FIG. 4 (FIG. 5), the H∞ norm of a transfer function $W_sM$ which relates to conversion of disturbances $w_1$, $w_2$ to magnitudes of control $z_1$, $z_2$ and the H∞ norm of a transfer function $W_tT$ which relates to conversion of disturbances $w_1$, $w_2$ to magnitudes of control $z_3$, $z_4$ are obtained, respectively. Since M and T in these transfer functions $W_sM$ and $W_tT$ are functions of a controller K, respectively, the controller K can be obtained by designing the whole system such that the H∞ norms of the transfer functions $W_sM$ and $W_tT$ therein are reduced.

In the example as shown in FIG. 4 (FIG. 5), P represents the results obtained by measuring and modeling a transfer function in an actual system from an ACM to an acceleration sensor, K represents a feedback matrix constituted of $K_{11}$, $K_{12}$, $K_{21}$ and $K_{22}$ of formula (1) in a controller to be designed, $w_1$ and $w_2$ each represent a disturbance input, $w_3$ represents observation noise, and $W_s$ and $W_t$ each represent a weighting function. The controller K is designed by modifying $W_s$ and $W_t$ by trial and error to reduce the transfer function. It should be noted that, in actual control of the system, the controller K is converted into an equation of state and control is effected in real-time in a time domain.

The characteristic of the present invention described above resides in that acceleration signals at plural positions are fed back as signals to control the vibration suppressing force of an ACM. Due to this characteristic, the present invention can solve the problem that, if acceleration signal from only one position were to be fed back, while vibration can be suppressed only at the controlled position, vibrations at other positions would rather increase.

In the present invention, in particular, vibration in the roll rotation direction around the roll axis O, generated by the drive of the engine itself, is suppressed. In this case, although vibration of a translation component is likely to occur at other positions, such vibration of a translation component can be effectively suppressed by feeding back acceleration signals at plural positions as signals for controlling vibrations suppressing force of the ACM as described above.

Regarding the positions of the acceleration sensors 4a, 4b, in a case where vibration in the roll direction of the engine is to be suppressed, the position on the engine which is remotest from the roll axis O is preferably selected as a first position and another position on the engine where vibration will increase when control is effected such that vibration at the first position is reduced to the minimum is preferably selected as a second position. The first position and the second position of the acceleration sensors are preferably on the same plane.

Examples

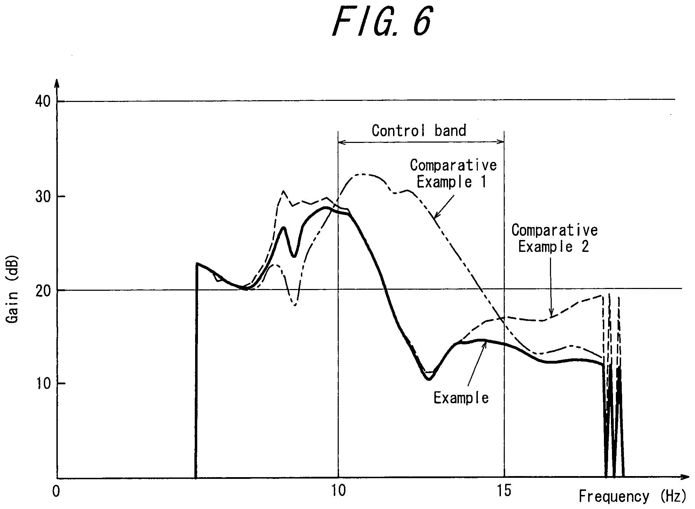

In the arrangement of the engine as shown in FIGS. 2 and 3, a base having the vehicle mounted thereon was subjected to vibration by a vibrator and the dependency, on frequency, of the amplitude of displacement of each position at which the acceleration sensor 3a was fixed was plotted as a graph on the basis of the acceleration signals detected by the acceleration sensor 3a. The results are shown in FIG. 6. In FIG. 6, Example 1 expressed by solid line shows the results obtained when control was effected by feedback of two acceleration signals from the acceleration sensors 3a, 3b to two ACMs, Example 2 expressed by broken line shows the results obtained when control was effected by only feeding the acceleration signal from a single acceleration sensor 3a back to two ACMs, and Comparative Example expressed by two-dotted line shows the results obtained when the ACM was not controlled.

As is obvious from FIG. 6, Example 1 and 2 both show, as compared with Comparative Example, that vibration can be very effectively suppressed in a frequency range of 10 to 15 Hz, which range is to be controlled. As a result, driving stability can be significantly improved in the tires of Examples. Further, Example 1 shows, as compared with Example 2, that Example 1 not only achieved the control results equivalent to those of Example 2 in the frequency band of 10 to 15 Hz to be controlled but also successfully suppressed vibration in a band beyond the range to be controlled. That is, Example 1 shows that ride comfort can also be significantly improved, without scarifying an effect of improving driving stability, by feeding acceleration signals at plural positions back as signals for controlling vibration suppressing force of the ACM.

The vehicle used in the tests had a diesel engine of 2500 cc mounted thereon. Regarding the condition of vibration application, only the front wheels were set on a vibrator base, the vibrator base was vibrated with frequency first continually increased from 5 to 20 Hz and then continually decreased from 20 to 5 Hz. The application of vibration was conducted in a state where a gear was set at the neutral position and only a side brake was working. Regarding the ACM, an ACM provided with an electromagnetic actuator was used.

The technical scope of the present invention is not restricted to the aforementioned embodiment and various modifications may be added thereto unless such modifications digress from the sprit of the present invention.

For example, although an acceleration sensor is shown as the detection means 17 and this detection means 17 is mounted at the outer surface of a case constituting the external contour of the drive unit 11 in the present embodiment, it is acceptable that a rotational angle sensor is employed instead of an acceleration sensor and this rotational angle sensor is provided on the crank shaft 11c.

In the modified example above, variation of torque transferred from the drive unit 11 to the drive shaft 12 can be detected by calculating angular acceleration from data of rotational angle of the crank shaft 11c measured by the rotational angle sensor.

Further, it is acceptable to employ, in place of the detection means 17 of the embodiment described above, a detection means including a light source for irradiating the outer surface of the tire 13 with light and a photo sensor for detecting reflected light from the outer surface of the tire 13. In this modified example, variation of torque described above can be detected from the difference in lightwave amplitude or lightwave frequency of the aforementioned reflected light detected by the photo sensor at a predetermined time interval.

Yet further, there may be employed a structure having both the rotational angle sensor described above and the acceleration sensor as shown in FIG. 1 as the detection means 17.

Yet further, the acceleration sensor may be mounted at the outer surface of a case of the transmission 11b of the cases of the driving unit 11.

Yet further, although a mount part capable of elastically supporting the weight of the drive unit 11 itself is shown as the connection part 16 in the embodiment described above, it is acceptable to employ, instead of the mount part, e. g. a torque rod having a rod, a first cylindrical part and a second cylindrical part, which cylindrical parts are connected to respective end portions of the rod, wherein one cylindrical part is connected to the drive unit 11 and the other cylindrical part is connected to the vehicle body frame.

Yet further, although a structure in which the drive unit 11 is elastically connected with the vehicle body frame 2 is shown as the connection part 16 in the embodiment described above, it is acceptable to employ, instead of the structure, an actuator such as a fluid pressure cylinder.

Yet further, although the drive unit 11 is provided inside the vehicle body frame 2 on the vehicle 14 front side therein in the foregoing embodiment, it is acceptable, alternatively, to provide the drive unit 11 inside the vehicle body frame 2 on the vehicle 14 rear side therein. Yet further, the present invention is applicable to either a FF vehicle or a FR vehicle.

Yet further, although a structure in which the aforementioned roll vibration, of the vibration behaviors of the drive unit 11, is controlled by operating the connection part 16 is shown in the embodiment described above, it is acceptable to control, in addition to the roll vibration, vibrations in the vehicle 14 front-rear direction and/or the vehicle 14 vertical direction by operating the connection part 16 in a manner similar to that in the foregoing embodiment.

Yet further, although a structure in which the connection part 16 is provided so as to be capable of being raised/lowered in the vehicle 14 vertical direction is shown in the embodiment described above, alternatively, it is acceptable to employ a structure in which each connection part 16 includes a rubber-like elastic body and rigidity in the vehicle 14 vertical direction of each rubber-like elastic body is changed based on the results of calculation in the controller 18.

Specifically, in FIG. 1, when the drive unit 11 is rotated clockwise around the roll axis O, for example, the side portion on the vehicle 14 rear side of the drive unit 11 is pushed up by the connection part 16 disposed on the vehicle 14 rear side and the side portion on the vehicle 14 front side of the drive unit 11 is pulled down by the connection part 16 disposed on the vehicle 14 front side by operating each of the pair of connection parts 16 to increase rigidity in the vehicle 14 vertical direction of the rubber-like elastic body in the connection part 16. In contrast, when the drive unit 11 is rotated anticlockwise around the roll axis O, the side portion on the vehicle 14 front side of the drive unit 11 is pushed up by the connection part 16 disposed on the vehicle 14 front side and the side portion on the vehicle 14 rear side of the drive unit 11 is pulled down by the connection part 16 disposed on the vehicle 14 rear side by increasing rigidity in the vehicle 14 vertical direction of the rubber-like elastic body in each of the connection parts 16 in a manner similar to that described above.

Yet further, it is acceptable to employ a structure in which the connection part 16 includes at least an outer cylinder, a mounting part disposed on one end side in the axial direction of the outer cylinder, and a rubber elastic portion for elastically connecting the mounting part with the outer cylinder and closing the opening portion at the one end portion in the axial direction of the outer cylinder, wherein liquid is sealingly reservoired inside the outer cylinder.

In this modified example, variation of torque transferred from the drive unit 11 to the drive shaft 12 may be suppressed by suppressing vibration of the drive unit 11 by controlling the liquid pressure inside the outer cylinder based on the results of calculation in the controller 18.

Yet further, the frequency component of the aforementioned roll vibration to be controlled by the controller 18 is not restricted to that of the embodiment.

## Claims

1.  A vehicle (14) having a damper (10), in which vehicle (14) a drive unit having an engine is provided in a vehicle body frame (2), the damper comprising: a connection part (16) for connecting the drive unit (11) with the vehicle body frame (2); and a detection means (17) for detecting vibrations of the drive unit (11); a controller (18) for controlling at least roll vibration of vibration behaviours of the drive unit (11) by operating the connection part (16) on the basis of a detection signal from the detection means (17), the damper is **characterised in that**: the detection means (17) is mounted at or on the outer surface of a case constituting the external contour of the drive unit, or fixed at plural positions (4a, 4b) at the surface of the engine (11); wherein the detected vibrations are roll vibrations around a roll axis (O) of the drive unit (11) with respect to a ground contact surface of the tire of the vehicle (13).

2.  The vehicle (14) having a damper (10) of claim 1, wherein the detection means (17) is adapted to detect variation of torque transferred to the drive shaft (12) in a structure in which tires are connected to respective end portions, in the axial direction, of the drive unit (11).

3.  The vehicle (14) having a damper (10) of claim 1 or 2, wherein the connection part (16) is a mount part or a torque rod for elastically connecting the drive unit (11) with the vehicle body frame (2).

4.  The vehicle (14) having a damper (10) of any of claims 1 to 3, wherein the connection part (16) is provided on each of respective side portions interposing a crank shaft (11c) therebetween in the horizontal direction, of the drive unit (11).

5.  The vehicle (14) having a damper (10) of any of claims 1 to 4, wherein the detection means (17) is provided, in the drive unit (11), in at least one of a crank shaft (11c) and the outer surface of a case constituting the external contour of the drive unit (11).

**6.** The vehicle (14) having a damper (10) of any of claims 1 to 5, wherein the controller (18) is adapted to control at least a frequency component in the range of 5 to 50 Hz (5 and 50 are inclusive), of roll vibration of the drive unit (11).

**7.** The vehicle (14) having a damper (10) of any of claims 1 to 3, wherein respective connection parts (16) are provided at respective side portions, in the vehicle front-rear direction, of the drive unit (11).

**Patentansprüche**

**1.** Fahrzeug (14), das einen Dämpfer (10) hat, wobei in dem Fahrzeug (14) eine Antriebseinheit, die einen Motor hat, in einem Fahrzeugaufbau-Rahmen (2) bereitgestellt wird, wobei der Dämpfer Folgendes umfasst: einen Verbindungsteil (16) zum Verbinden der Antriebseinheit (11) mit dem Fahrzeugaufbau-Rahmen (2) und ein Erfassungsmittel (17) zum Erfassen von Vibrationen der Antriebseinheit (11), ein Steuergerät (18) zum Steuern wenigstens ein Rollvibration von Vibrationsverhalten der Antriebseinheit (11) durch das Betätigen des Verbindungsteils (16) auf der Grundlage eines Erfassungssignals von dem Erfassungsmittel (17), wobei der Dämpfer **dadurch gekennzeichnet ist, dass**: das Erfassungsmittel (17) an oder auf der Außenfläche eines Gehäuses angebracht ist, das den Außenumriss der Antriebseinheit darstellt, oder an mehreren Positionen (4a, 4b) an der Oberfläche des Motors (11) befestigt ist, wobei die erfassten Vibrationen Rollvibrationen um eine Rollachse (O) der Antriebseinheit (11) in Bezug auf eine Bodenberührungsfläche des Reifens (13) des Fahrzeugs sind.

**2.** Fahrzeug (14), das einen Dämpfer (10) hat, nach Anspruch 1, wobei das Erfassungsmittel (17) dafür eingerichtet ist, eine Variation des zu der Antriebswelle (12) übertragenen Drehmoments in einer Struktur zu erfassen, in der Reifen mit jeweiligen Endabschnitten, in der axialen Richtung, der Antriebseinheit (11) verbunden sind.

**3.** Fahrzeug (14), das einen Dämpfer (10) hat, nach Anspruch 1 oder 2, wobei der Verbindungsteil (16) ein Anbringungsteil oder ein Drehstab zum elastischen Verbinden der Antriebseinheit (11) mit dem Fahrzeugaufbau-Rahmen (2) ist.

**4.** Fahrzeug (14), das einen Dämpfer (10) hat, nach einem der Ansprüche 1 bis 3, wobei der Verbindungsteil (16) auf jedem der jeweiligen Seitenabschnitte, die zwischen denselben in der horizontalen Richtung eine Kurbelwelle (11c) eingeschoben haben, der Antriebseinheit (11) bereitgestellt wird.

**5.** Fahrzeug (14), das einen Dämpfer (10) hat, nach einem der Ansprüche 1 bis 4, wobei das Erfassungsmittel (17), in der Antriebseinheit (11), in wenigstens einem von einer Kurbelwelle (11c) und der Außenfläche eines Gehäuses, das den Außenumriss der Antriebseinheit (11) darstellt, bereitgestellt wird.

**6.** Fahrzeug (14), das einen Dämpfer (10) hat, nach einem der Ansprüche 1 bis 5, wobei das Steuergerät (18) dafür eingerichtet ist, wenigstens eine Frequenzkomponente in dem Bereich von 5 bis 50 Hz (5 und 50 sind eingeschlossen) der Rollvibration der Antriebseinheit (11) zu steuern.

**7.** Fahrzeug (14), das einen Dämpfer (10) hat, nach einem der Ansprüche 1 bis 3, wobei jeweilige Verbindungsteile (16) an jeweiligen Seitenabschnitten, in der Fahrzeuglängsrichtung, der Antriebseinheit (11) bereitgestellt werden.

**Revendications**

**1.** Véhicule (14) ayant un amortisseur (10), dans lequel véhicule (14) une unité d'entraînement ayant un moteur est prévue dans une ossature de caisse de véhicule (2), l'amortisseur comprenant : un élément de connexion (16) pour connecter l'unité d'entraînement (11) à l'ossature de caisse de véhicule (2) ; et un moyen de détection (17) pour détecter des vibrations de l'unité d'entraînement (11) ; un contrôleur (18) pour contrôler au moins une vibration de roulis de comportements de vibrations de l'unité d'entraînement (11) en manoeuvrant l'élément de connexion (16) sur la base d'un signal de détection en provenance du moyen de détection (17), l'amortisseur étant **caractérisé en ce que** : le moyen de détection (17) est monté au niveau de ou sur la surface externe d'un carter constituant le contour externe de l'unité d'entraînement, ou fixé dans plusieurs positions (4a, 4b) au niveau de la surface du moteur (11) ; dans lequel les vibrations détectées sont des vibrations de roulis autour d'un axe de roulis (O) de l'unité d'entraînement (11) par rapport à une surface de contact avec le sol du pneu du véhicule (13).

**2.** Véhicule (14) ayant un amortisseur (10) selon la revendication 1, dans lequel le moyen de détection (17) est adapté pour détecter une variation de couple de torsion transférée à l'arbre d'entraînement (12) dans une structure où des pneus sont connectés à des parties d'extrémité respectives, dans la direction axiale, de l'unité d'entraînement (11).

3. Véhicule (14) ayant un amortisseur (10) selon la revendication 1 ou 2, dans lequel l'élément de connexion (16) est un élément de montage ou une barre de couple de torsion pour connecter de manière élastique l'unité d'entraînement (11) à l'ossature de caisse de véhicule (2).

4. Véhicule (14) ayant un amortisseur (10) selon l'une quelconque des revendications 1 à 3, dans lequel l'élément de connexion (16) est prévu sur chacune des parties latérales respectives, intercalant un vilebrequin (11c) entre elles dans la direction horizontale, de l'unité d'entraînement (11).

5. Véhicule (14) ayant un amortisseur (10) selon l'une quelconque des revendications 1 à 4, dans lequel le moyen de détection (17) est prévu, dans l'unité d'entraînement (11), dans au moins l'un parmi un vilebrequin (11c) et la surface externe d'un carter constituant le contour externe de l'unité d'entraînement (11).

6. Véhicule (14) ayant un amortisseur (10) selon l'une quelconque des revendications 1 à 5, dans lequel le contrôleur (18) est adapté pour contrôler au moins une composante de fréquence dans la plage de 5 à 50 Hz (5 et 50 sont inclus) d'une vibration de roulis de l'unité d'entraînement (11).

7. Véhicule (14) ayant un amortisseur (10) selon l'une quelconque des revendications 1 à 3, dans lequel des éléments de connexion respectifs (16) sont prévus au niveau de parties latérales respectives, dans la direction avant-arrière du véhicule, de l'unité d'entraînement (11).

*FIG. 1*

## FIG. 2

## FIG. 3

*FIG. 4*

EP 2 141 040 B1

FIG. 5

# FIG. 6

EP 2 141 040 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11325165 A